(19) Europäisches Patentamt / European Patent Office / Office européen des brevets

(11) **EP 2 097 919 B1**

(12) **FASCICULE DE BREVET EUROPEEN**

(45) Date de publication et mention de la délivrance du brevet:
**11.05.2011 Bulletin 2011/19**

(21) Numéro de dépôt: **07848029.0**

(22) Date de dépôt: **10.12.2007**

(51) Int Cl.:
*H01J 9/02* *(2006.01)*  *H01J 1/304* *(2006.01)*

(86) Numéro de dépôt international:
**PCT/EP2007/063636**

(87) Numéro de publication internationale:
**WO 2008/068351 (12.06.2008 Gazette 2008/24)**

(54) **TUBE ELECTRONIQUE A CATHODE FROIDE A COMMANDE OPTIQUE**

ELEKTRONISCHE KALTKATHODENRÖHRE MIT OPTISCHER KONTROLLE

COLD CATHODE ELECTRONIC TUBE WITH OPTICAL CONTROL

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **08.12.2006 FR 0610731**

(43) Date de publication de la demande:
**09.09.2009 Bulletin 2009/37**

(73) Titulaire: **Thales**
**92200 Neuilly Sur Seine (FR)**

(72) Inventeurs:
• **LEGAGNEUX, Pierre**
**78320 Le Mesnil St Denis (FR)**
• **HUDANSKI, Ludovic**
**60150 Giraumont (FR)**
• **SCHNELL, Jean-Philippe**
**75007 Paris (FR)**
• **DIEUMEGARD, Dominique**
**78750 Mareil-Marly (FR)**
• **GUISET, Pierrick**
**94117 Arcueil Cedex (FR)**
• **DE ROSSI, Alfredo**
**75014 Paris (FR)**

(74) Mandataire: **Esselin, Sophie et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
EP-A- 1 022 764    WO-A-2005/045871
WO-A-2006/121872    JP-A- 2006 216 799
US-A1- 2002 006 489    US-A1- 2003 087 511
US-B1- 6 692 327

**Description**

L'invention concerne un tube électronique à cathode froide, et plus particulièrement un tube à commande optique.

De tels tubes électroniques sont notamment utilisés pour réaliser des systèmes de détection THz de molécules (sécurité).

Pour ces applications, l'utilisation de cathodes froides comme émetteurs dans ces dispositifs plutôt que des cathodes thermoïoniques "chaudes" offrent différents avantages, tels que la possibilité de moduler directement l'émission électronique, d'obtenir des faisceaux d'électrons en paquets plus monocinétiques, d'obtenir des faisceaux « à façon » de formes quelconques, de consommer moins de puissance, de supprimer les temps de chauffage... Ainsi l'utilisation de cathodes froides dans des tubes électroniques permet de réaliser des tubes plus compacts, moins lourds et à plus grande efficacité.

Dans l'invention, on s'intéresse aux tubes électroniques à cathodes froides à nanotubes de carbone, avec lesquels on a gagné en stabilité, en courant maximal avant électro-migration, en durée de vie, en facteur de forme, par rapport aux autres technologies. Les nanotubes de carbone sont formés de carbone à liaisons de symétrie essentiellement sp2. Ils se présentent sous forme de longs et minces cylindres creux souvent fermés à leurs extrémités et peuvent se présenter sous deux variétés : les mono paroi (Single Walled carbon NanoTube SWNT) et les multi parois (Multi Walled carbon NanoTube MWNT). Un nanotube mono paroi, dans le cas où il est parfait, peut être défini comme un feuillet de graphène (réseau hexagonal de carbone) enroulé et refermé sur lui-même formant ainsi un cylindre d'épaisseur monoatomique constitué uniquement d'atomes de carbone. On obtient ainsi un tube qui a un diamètre typiquement de 0,7 à quelques nm avec une longueur de quelques dizaines de nanomètres jusqu'à quelques millimètres. Un nanotube multi parois est essentiellement formé d'un empilement concentrique et jointif de cylindres graphèniques par exemple au nombre de 7 à 10 avec un diamètre intérieur par exemple de quelques nanomètres et un diamètre extérieur d'environ 15 nanomètres voire plus.

Selon l'état de l'art, un tube électronique de ce type comprend des cathodes à disposition régulière de nanotubes de carbone espacés d'une à deux fois leur hauteur et alignés verticalement, perpendiculairement au substrat conducteur qui les supporte. Ces cathodes ont déjà permis d'atteindre des courants de 10mA sur $0.5 \times 0.5$ mm$^2$ et des densités de courant de faisceau (sur des surfaces macroscopiques) de 4A/cm$^2$ en continu et 15A/cm$^2$ pic en émission modulée à 1.5GHz. Ces densités de courant sont inférieures à celles offertes par les cathodes à pointes métalliques, mais elles sont proches de celles émises par les cathodes thermoïoniques, de l'ordre de 1 à 10 A/cm$^2$ à la source, permettant après concentration d'obtenir des faisceaux ayant une densité de courant de l'ordre de 50 à 100 A/cm$^2$. On notera à cet égard que les faisceaux des cathodes thermoïoniques sont plus facilement concentrables (on peut donner une forme focalisatrice aux cathodes elle-mêmes) que les faisceaux émis par les cathodes froides, ce qui nécessite pour ces dernières d'une part des optiques de collimation et d'autre part, une densité de courant à la source bien plus importante.

Les besoins en densité de courant sont de plus en plus importants, pour pouvoir offrir sur le marché des amplificateurs et oscillateurs micro-ondes plus compacts, légers et à fortes puissances, des sources THz à commande électrique ou optique, des sources haute brillance d'ultra violet et de rayons X, et plus généralement pour améliorer les performances des systèmes : débit de transmission (télévision ou radio numérique), brillance (sources UV ou X), compacité.... Il existe également un besoin croissant que ces faisceaux denses soient de meilleure qualité, notamment plus monocinétiques, de manière à permettre la simplification des optiques, et des collecteurs (notamment dans les tubes à ondes progressives). Par ailleurs les valeurs pratiques de la conductivité électrique, la fréquence de coupure électrique, la conductibilité thermique et la fréquence de plasma des nanotubes restreignent l'efficacité de leur utilisation pour certaines applications. En particulier, ils ne sont plus conducteurs aux fréquences optiques, ce qui empêche leur utilisation dans des dispositifs à commande optique directe, en particulier dans les générateurs.

Il existe donc aujourd'hui un besoin en tubes électroniques à cathodes froides qui puissent répondre à ces différents critères, et notamment fournir des faisceaux électroniques plus denses (densité de courant de l'ordre de 10 à 100 A/cm$^2$), plus monocinétiques, tout en restant très compacts et stables.

Les cathodes froides à nanotubes présentent à cet égard des limitations technologiques, qui empêchent d'espérer une amélioration suffisante de leurs performances. Notamment, la conductivité modérée du matériau obtenu en pratique entraîne une chute de tension le long du nanotube : on a un dépôt de chaleur par effet joule le long du nanotube. Il en résulte une limitation des courants émis, pour ne pas risquer la destruction des nanotubes par échauffement, et par suite une limitation de la densité de courant à la source. En effet, on observe un phénomène de destruction des nanotubes au-delà d'une certaine densité de courant.

On peut montrer que cette destruction se fait par dépassement d'une température "de destruction".

Après destruction d'un nanotube, il est en effet généralement observé une zone étendue (sur une zone de diamètre de l'ordre de $10\mu$m autour de la position initiale du nanotube) dans laquelle le substrat en silicium est fondu (la température de fusion du silicium $T_{fusion}(Si) = 1687K$).

Ceci peut s'expliquer par la dissipation thermique par effet joule dans le nanotube de carbone : parcouru par un courant *I*, le nanotube voit sa température augmenter à cause de cette dissipation thermique.

Le nanotube peut être considéré comme un conducteur unidimensionnel. Parcouru par un courant *I*, sa température augmente avec la position sur l'axe et le maximum de température est atteint au niveau de son extrémité.

En utilisant l'équation de la chaleur à une dimension (on considère le chauffage par effet Joule, la conduction thermique le long du nanotube et on néglige la radiation), il est facile d'exprimer la température au niveau de l'extrémité du nanotube $T_{extrémité}$ en fonction de la température du substrat $T_{substrat}$ :

$$T_{extrémité} = T_{susbtrat} + I. \; P_{dissipée}/(2\kappa S)$$

où I est la longueur du nanotube (en mètres), $P_{dissipée}$ est la puissance dissipée dans le nanotube (en Watts), $\kappa$ est la conductivité thermique du nanotube (en $W.m^{-1}.K^{-1}$), et $S = \pi r^2$ est la section du nanotube (en $m^2$) avec r le rayon du nanotube.

La conductivité thermique de nanotubes de carbone a été évaluée de manière expérimentale et l'on trouve différentes valeurs dans la littérature comprise entre $\kappa = 25\,W.m^{-1}.K^{-1}$ et $\kappa = 200\,W.m^{-1}.K^{-1}$.

Si l'on prend une longueur de nanotube de $I = 5\mu m$ et un rayon de $r = 25\,nm$, on peut alors tracer l'évolution de la température de l'extrémité du nanotube en fonction de la puissance dissipée et ce pour différentes valeurs de la conductivité thermique.

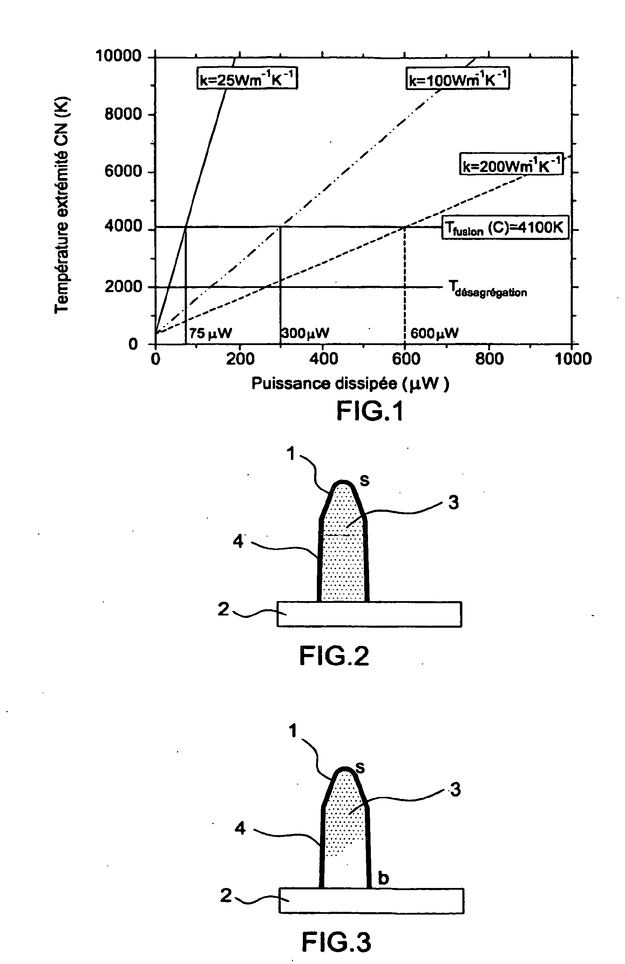

Les résultats sont présentés sur la figure 1 pour 3 valeurs de la conductivité thermique $\kappa = 25, 100$, *et* $200\,W.m^{-1}.K^{-1}$. On notera que la valeur de $\kappa = 100\,W.m^{-1}.K^{-1}$ semble la plus probable pour les nanotubes multi parois MWNTs.

Sur le graphe de la figure 1, on a également représenté la température de fusion du carbone $T_{fusion}$ (C) qui est de 4100 K, et la température $T_{désagrégation}$ à laquelle, selon la littérature, l'extrémité des nanotubes soumis au champ électrique d'émission commence à se désagréger, soit 2000 K.

Ce graphe montre que les puissances dissipées (quelques dixièmes de mW) dans les nanotubes usuels dont la résistance est de l'ordre de quelques dizaines à la centaine de Kohms, lorsqu'ils émettent des courants de l'ordre de 0.1 mA, permettent d'atteindre des températures très élevées à leur extrémité voire la température de désagrégation. On assiste alors à la destruction de l'émetteur et la formation d'un canal de conduction entre la cathode et l'anode avec formation d'un arc électrique qui provoque un cratère que l'on observe.

Or dans l'invention, on cherche à augmenter la puissance des tubes électroniques à cathodes froides, à accroître leur compacité, leur légèreté et leur rendement. S'agissant plus particulièrement des sources UV et X, on cherche également à accroître la brillance pour en améliorer la résolution et minimiser les temps d'analyse. Et ceci nécessite de disposer de tubes électroniques à cathodes froides aptes à délivrer des faisceaux électroniques à forte densité de courant, et très monocinétiques.

Une idée à la base de l'invention est de réduire la résistance du nanotube pour d'une part rendre le faisceau plus monocinétique, d'autre part empêcher ou limiter le dépôt de chaleur par effet Joule le long de l'axe du nanotube, de manière à reculer la température de destruction et autoriser ainsi des densités de courant plus importantes.

Dans l'invention, pour résoudre le problème de limitation de la densité de courant dans les nanotubes des cathodes froides selon l'état de l'art, on a eu l'idée de former un émetteur à base d'un nanotube de carbone, qui ne soit plus creux, mais au contraire tel que l'intérieur du cylindre contient un matériau métallique.

On connaît dans l'état de l'art des nanotubes à coeurs métalliques, par exemple des coeurs métalliques de Pb, Cu, Fe, Co, Ni, Sn.... De tels nanotubes ont été fabriqués et étudiés pour montrer qu'ils possèdent des propriétés magnétiques intéressantes permettant de réaliser des dispositifs de stockage et lecture magnétiques de données, comme expliqué dans l'article "Enhanced magnetic coercivities in Fe Nanowires" de N. Grobert et al, Applied Physic Letters, Vol. 75, N°21, 22 novembre 1999.

On connaît aussi de la demande US 2002/0006489 publiée le 17 janvier 2002, un émetteur formé à nanotube de carbone hydrogéné, formé par une protusion métallique recouverte de nanotube de carbone hydrogéné. Un tel émetteur est prévu pour des applications nécessitant des courants peu élevés, dans un environnement de vide "mauvais". La structure métallique permet ici de préserver la conductance si le pourtour de l'émetteur venait à s'endommager du aux bombardements électroniques qui se produisent dans un tel environnement.

Dans l'invention, on s'intéresse à des émetteurs capables de fournir des densités de courant très élevées, de l'ordre de 10 à 100 Ampères/$cm^2$, alors que dans le document précité, ce sont des faibles densités de courant, de l'ordre de 10 milliampères/$cm^2$.

Dans l'invention, c'est la possibilité de repousser la température de destruction du nanotube de carbone qui est recherchée ainsi que la possibilité de rendre le faisceau plus monocinétique. L'idée qui sous-tend l'invention est que le coeur métallique a une résistance électrique inférieure à celle des nanotubes de carbone. Le courant injecté passera donc naturellement essentiellement dans le coeur métallique. Il en résulte deux effets bénéfiques. Le premier est que le phénomène de dépose d'énergie thermique par effet Joule le long de l'axe longitudinal de la pointe est très limité : la bonne conductivité du matériau du coeur vient en contrepoint de la faible conductivité de l'enveloppe : la température limite de destruction est ainsi reculée en sorte que l'on peut atteindre des densités de courant bien plus importantes. En outre, le matériau métallique étant "revêtu" d'un matériau en carbone de symétrie sp2, il est protégé de l'environnement et l'émetteur ainsi constitué bénéficie des propriétés de stabilité de l'enveloppe. Le deuxième effet bénéfique est que la différence de potentiel électrique développée entre le pied de l'émetteur et son extrémité sera très faible. La perte d'énergie des électrons dans l'émetteur avant émission sera très réduite (de l'ordre de 0,1eV au lieu de quelques eV pour un nanotube usuel), quel que soit le courant émis, et de plus, étant faible, elle variera très peu d'un émetteur à l'autre. Il en résultera l'émission d'un faisceau très monocinétique.

Ainsi, les avantages séparés du nanotube et du métal se combinent alors que leurs inconvénients disparaissent. L'effet de la combinaison des deux matériaux pour former un émetteur est donc double.

Un avantage supplémentaire de l'émetteur ainsi formé par rapport aux nanotubes de carbone "creux" selon l'état de l'art des cathodes froides est notamment le bénéfice de la fréquence de plasma élevée des métaux ou de leurs alliages, permettant une utilisation avantageuse d'une cathode comprenant de tels émetteurs dans les amplificateurs terahertz à commande optique, tels que décrits par exemple dans la demande JP2006216799.

Avec des cathodes munies de tels émetteurs, on peut ainsi réaliser des tubes électroniques à fortes densités de courant, compacts, stables et à haute fréquence plasma : ces émetteurs sont alors conducteurs aux fréquences optiques et peuvent être utilisés dans des générateurs d'ondes, à commande optique directe par le champ électrique d'une onde optique, notamment des générateurs d'ondes terahertz.

L'invention concerne ainsi un tube électronique à cathode froide à commande à onde optique, la cathode froide comprenant un émetteur ou une pluralité d'émetteurs, de dimensions nanométriques et/ou micrométriques, de forme allongée, à carbone à liaison sensiblement à symétrie sp2, caractérisé en ce que la zone émissive de chaque émetteur comprend un premier matériau qui est du carbone à liaison sensiblement à symétrie sp2, recouvrant en contact direct ou indirect un deuxième matériau métallique, de fréquence de plasma sensiblement égale ou supérieure à la fréquence de l'onde optique de commande. deuxième matériau métallique, de fréquence de plasma sensiblement égale ou supérieure à la fréquence de l'onde optique de commande.

Dans un mode de réalisation, l'émetteur comprend un troisième matériau catalyseur de la croissance de carbone sp2, situé entre lesdits premier et deuxième matériaux, et en contact avec ceux-ci.

Dans un mode de réalisation, le deuxième matériau est en contact direct avec ledit premier matériau, sur tout ou partie de la longueur de l'émetteur en partant du sommet, et est un métal choisi parmi Ni, Fe, Co,Y, ou un alliage avec au moins un de ces métaux.

Le deuxième matériau a au moins une de ses dimensions, inférieure à la longueur d'onde de l'onde optique.

L'invention s'applique à des dispositifs électroniques amplificateurs microondes ou terahertz.

D'autres avantages et caractéristiques de l'invention sont détaillés dans la description suivante en référence aux dessins illustrés d'un mode de réalisation de l'invention, donné à titre d'exemple non limitatif. Dans ces dessins :

- la figure 1 illustre le phénomène de destruction thermique dans un nanotube de carbone;
- la figure 2 illustre de façon schématique une cathode à un émetteur selon l'invention;
- la figure 3 illustre une variante d'un tel émetteur;
- la figure 4 illustre de façon schématique une cathode comportant une pluralité d'émetteurs selon l'invention disposés de façon aléatoire;
- la figure 5a, respectivement 5b illustre de façon schématique une cathode comportant une pluralité d'émetteurs selon l'invention, suivant une disposition quasi-déterministe, respectivement déterministe, périodique;
- la figure 6 illustre une étape d'électrolyse d'un procédé de fabrication qui peut être utilisé pour fabriquer une cathode selon l'invention;
- la figure 7 illustre les fils métalliques obtenus par cette étape d'électrolyse;
- la figure 8 illustre de façon schématique une variante d'une structure d'un émetteur selon l'invention;
- la figure 9 un amplificateur de signaux terahertz à commande optique;
- la figure 10 représente le gain en fonction de la longueur d'onde pour une particule de Nickel;
- la figure 11 montre le rapport d'aspect en fonction de la longueur d'onde, la valeur du gain étant indiquée par le niveau de gris selon l'échelle de gris indiquée à droite;
- la figure 12 montre une cathode froide comprenant un dispositif à onde de surface selon un mode de réalisation de l'invention.

Nous allons d'abord décrire une cathode froide à émetteur(s) d'électrons selon l'invention, particulièrement avantageuse pour une utilisation dans un tube électronique à commande optique. Ensuite, nous décrirons un tube électronique à commande optique selon l'invention.

Une cathode froide à un émetteur d'électrons selon l'invention est illustrée sur la figure 2. Elle comprend un émetteur 1 formé sur un substrat conducteur 2, dont la structure comprend principalement un premier matériau 4 de type carbone à symétrie sp2, et un deuxième matériau métallique 3, le premier matériau formant un revêtement de surface du deuxième matériau, c'est à dire entourant et au contact direct de ce deuxième matériau.

De manière plus détaillée, l'émetteur comprend une partie métallique 3, de dimensions nanométriques et/ou micrométriques encapsulée, enveloppée par le revêtement 4 de carbone à symétrie sp2. Ce revêtement 4 forme un nanotube de carbone et la partie métallique 3 forme le coeur métallique de ce nanotube.

Dans l'exemple, la partie métallique, 3 occupe entièrement l'intérieur du nanotube 4, sur toute la longueur de l'émetteur.

Dans l'invention, pour une application à un tube électronique à commande optique, au moins une des dimensions de la partie métallique 3, est choisie inférieure à la longueur de l'onde optique. Par exemple sa hauteur de la partie métallique, qui est, dans l'exemple illustré sur la figure 2, égale à la longueur interne de l'émetteur, est choisie inférieure à la longueur d'onde optique.

Plus généralement, il suffit que la partie métallique 3 de l'émetteur soit présente au sommet de l'émetteur. Par exemple, comme illustré en variante sur la figure 3a, la partie métallique peut avoir une forme continue comprenant le sommet s du nanotube et une partie de la longueur du nanotube du sommet vers la base b, selon le procédé de fabrication de l'émetteur. Sous le matériau métallique 3, l'émetteur est creux.

La forme du matériau 3 peut être variée. La figure 3b illustre ainsi un exemple selon lequel la partie basse du matériau métallique, c'est à dire à l'opposé du sommet, a une forme conique, avec le sommet du cône pointant vers la base b. Le revêtement de feuillets de carbone à liaison sensiblement à symétrie sp2 est alors plus épais dans cette zone.

On notera que les figures 2 et 3a et 3b sont très schématiques. Elles montrent une forme en pointe au sommet de l'émetteur, mais d'autres formes sont possibles, plus arrondies notamment.

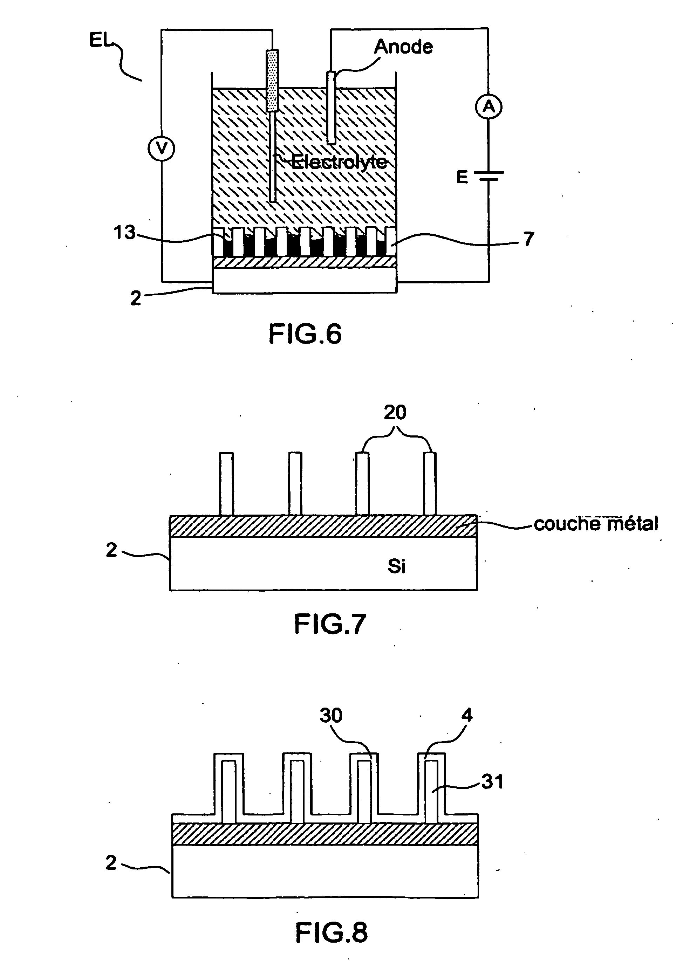

La figure 8 illustre un autre mode de réalisation d'émetteurs pour une cathode froide selon l'invention, utilisable dans un tube électronique à commande optique.

Dans ce mode de réalisation, l'émetteur comprend un troisième matériau métallique 30 qui est catalyseur de la croissance de carbone à liaison sensiblement à symétrie sp2, et qui est situé entre ledit deuxième matériau métallique 3, à fréquence de plasma sensiblement égale ou supérieure à la longueur d'onde optique de commande, et le revêtement de carbone 4, et en contact avec ces deux matériaux 3 et 4.

Pour des applications de fortes puissances; la cathode comportera en pratique une pluralité d'émetteurs tels que l'émetteur 1 illustré sur les figures 2 ou 3, disposés sur le même substrat.

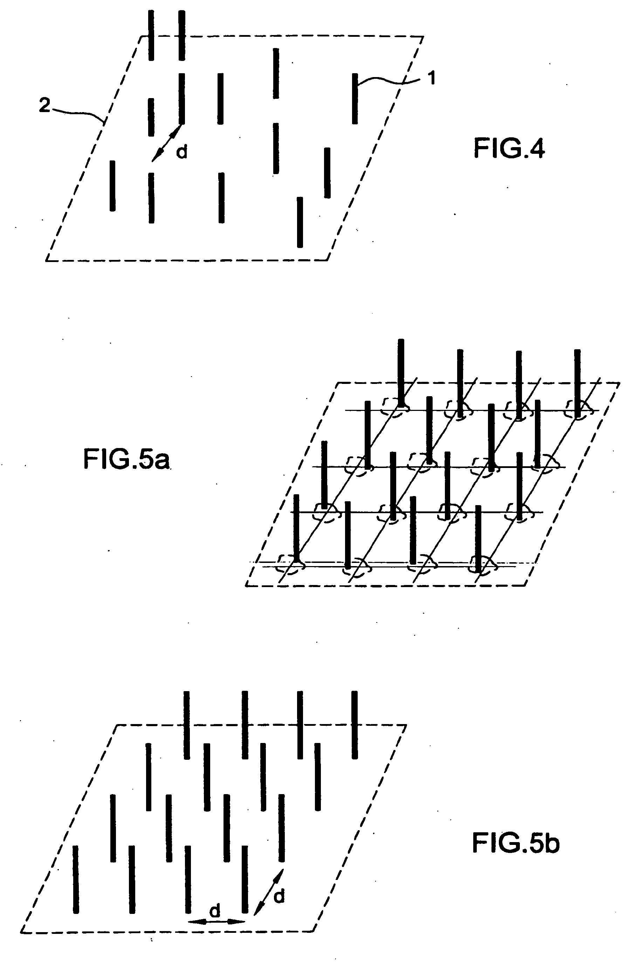

Les figures 4, 5a et 5b illustrent une telle cathode à pluralité d'émetteurs selon l'invention. Dans la figure 4, les émetteurs sont disposés selon un dessin aléatoire. Dans les figures 5a et 5b, les émetteurs sont respectivement disposés selon un dessin quasi déterministe et déterministe. Dans les cas de figures de dispositions aléatoires ou quasi déterministes, la distance moyenne entre les émetteurs est choisie pour correspondre à une distance optimale en sorte notamment qu'il y ait peu d'écrantage mutuel des champs électriques au sommet des émetteurs. L'écrantage des champs électriques entre les émetteurs est en effet préjudiciable au phénomène d'extraction des électrons à chaque émetteur. La distance moyenne est déterminée pour obtenir une densité d'émetteurs sur le substrat qui soit optimum, c'est à dire qui correspond à une densité maximum autorisée par le procédé de fabrication utilisé, et qui garantit qu'il n'y ait pas d'effets d'écrantage des champs au sommet des pointes.

La condition de non écrantage est généralement donnée par une distance d comprise entre sensiblement une à deux fois la hauteur h de l'émetteur 1 (ou du nanotube 4) dans le cas d'une localisation déterministe. Dans le cas d'une localisation aléatoire ou quasi déterministe, on considère la distance moyenne entre émetteurs. Dans ce cas, la condition de non écrantage des champs électriques ne sera pas toujours vérifiée entre deux émetteurs voisins et la densité de courant émise par la cathode sera un peu plus faible.

Dans le cas d'une localisation déterministe des émetteurs, la condition de non écrantage pourra être strictement vérifiée, ce qui est plus avantageux en terme de densité de courant du faisceau qui peut en être obtenu.

La possibilité de localiser de façon aléatoire (figure 4), quasi déterministe (figure 5a) ou déterministe (figure 5b) les émetteurs sur le substrat est liée au procédé de fabrication utilisé.

Dans le cas d'une localisation déterministe, le dessin sera avantageusement régulier, de préférence périodique. Dans l'exemple illustré (figure 5b) on a ainsi un réseau périodique de 4x4 émetteurs.

Dans la disposition quasi-déterministe observée sur la figure 5a, on observe une légère déviation aléatoire de la position de chaque émetteur par comparaison avec une disposition idéalement périodique des émetteurs comme illustrée sur la figure 5b.

Quelques exemples de fabrication d'émetteurs selon l'invention vont maintenant être décrits à titre d'exemples non limitatifs.

Dans un premier exemple de fabrication, on réalise les nanotubes de carbone 4 sur le substrat, puis on remplit ces nanotubes par des méthodes thermiques ou chimiques. On pourra notamment se reporter aux articles suivants qui décrivent de tels procédés de remplissage : "Capillarity-induced filling of carbon nanotubes" de P.M. Ajayan et al, Nature 361, pp 333-334, 28 janvier 1993 ; "A method for synthezing large quantities of carbon nanotubes and encapsulated copper nanowires" de A.A. Setlur et al, Applied Physics Letters, Vol. 69, Issue 3, pp 345-347. Les procédés de fabrication des nanotubes de carbone sont bien connus et utilisent des techniques qui permettent une localisation des nanotubes selon un dessin régulier (figure 4). Les techniques de remplissage du nanotube peuvent conduire à un remplissage incomplet comme illustré sur la figure 3.

Dans un autre exemple de fabrication, on réalise une croissance simultanée nanotube de carbone/ coeur métallique par thermolyse de composés organométalliques, notamment par thermolyse de ferrocène, comme décrit par exemple dans l'article : "*Enhanced magnetic coercivities in Fe nanowires*" de N.Grobert et al déjà cité. Ces procédés de croissance directe des nanotubes à coeurs métalliques par thermolyse permettent d'obtenir un métal compact, contrairement aux techniques de remplissage. Cette compacité du métal obtenue est avantageuse car la conduction du coeur métallique est meilleure : moins de dépôt de chaleur et moins de différence de potentiel.

Ces procédés par thermolyse conduisent à une localisation non déterminée, aléatoire, dense des émetteurs (figure 4). L'émission se fait préférentiellement par les nanotubes les plus longs qui sont plus distants les uns des autres que le reste des nanotubes. Cependant, la densité de ces émetteurs effectifs n'est pas optimale, ni leur distance moyenne.

Dans un autre procédé de fabrication, on réalise d'abord la partie métallique, sous forme de fils, puis l'on crée le revêtement 4 de carbone de symétrie sp2 par-dessus. Dans ce cas, on obtient un émetteur dont la partie métallique est complète de la base au sommet de l'émetteur comme illustré sur la figure 1 et entièrement revêtu, enveloppé, de carbone de symétrie sp2, sous forme de feuillets. Les émetteurs obtenus sont disposés parallèles les uns par rapport aux autres, sensiblement orthogonaux par rapport au substrat, ce qui est tout à fait favorable à l'émission d'un faisceau de densité optimale.

Les fils métalliques sont réalisés sur le substrat conducteur par tout procédé connu. Par exemple, comme illustré sur la figure 6, une membrane dite microporeuse ou multipores, ou encore membrane "*track-etched*" 7 est utilisée, pour faire croître dans les pores de cette membrane un métal ou un alliage 13, par un procédé d'électrolyse, pour obtenir les fils métalliques. La membrane est ensuite dissoute. On obtient alors un substrat 2 avec un ensemble de fils métalliques 20 alignés en parallèle verticaux comme illustré schématiquement sur la figure 7.

Dans ce procédé, il est aussi possible d'avoir le substrat lui-même recouvert de carbone de symétrie sp2, en continuité électrique avec le revêtement 4 des fils (voir figure 8). Ceci favorise un très bon accrochage des émetteurs sur le substrat.

On notera que dans ce dernier cas, le substrat sera par exemple du silicium revêtu d'une couche de métal favorisant la croissance des fils (figures 7 et 8).

Un procédé de croissance de fils métalliques est décrit dans la publication "Fabrication of a new generation of track-etched templates and their use for the synthesis of metallic and organic nanostructures" de Laurence Dauginet-De Pra et al, Nuclear Instruments and Methods in Physics Research Section B: Beam Interactions with Materials and Atoms, Volume 196, Issues 1-2, November 2002, pages 81-88. Un tel procédé utilise en pratique une irradiation aux ions lourds et rapides, par exemple des ions d'argon à 200 Mev, d'une couche polymère photosensible, par exemple un polycarbonate, déposée sur le substrat. Cette irradiation conduit à la formation d'une zone perturbée appelée trace latente, qui correspond à un dépôt considérable d'énergie le long du parcours rectiligne de l'ion dans le polymère. Les traces latentes ainsi formées dans le polymère peuvent être ensuite révélées par attaque chimique, pour conduire à la création de pores cylindriques rectilignes de très petit diamètre, parallèles entre eux. Les traces latentes qui sont formées par cette irradiation, sont ensuite révélées, typiquement par attaque chimique au moyen d'un agent chimique approprié. On obtient une pluralité de pores, c'est à dire des trous cylindriques rectilignes dans la membrane 7 (figure 6), sur toute son épaisseur.

Avec un tel procédé les pores obtenus, et par suite les fils métalliques 20, sont répartis de façon aléatoire respectivement dans la membrane et sur le substrat. Si on veut obtenir une localisation des fils métalliques selon un dessin régulier quasi-déterministe, on utilisera avantageusement un substrat conducteur recouvert d'une couche isolante dans laquelle on aura ménagé des trous par lithographie et attaque chimique par exemple. Les trous seront disposés selon la disposition recherchée pour les fils métalliques, par exemple en dessin périodique avec un espacement bien déterminé. Les trous auront une dimension telle que, avec la dose d'irradiation choisie, en moyenne une seule trace latente soit réalisée dans la membrane dans une zone située au dessus du trou. La croissance électrolytique ne se produira que dans les pores de la membrane situés au-dessus des trous. Pour les autres pores, la continuité de la conduction électrique sera interrompue par la couche isolante, et le dépôt électrolytique ne se produira pas.

D'autres procédés de localisation peuvent être utilisés comme ceux décrits dans le brevet français publié sous le numéro FR2857954, déposé le 25 juillet 2003, et ayant pour titre "procédé de croissance localisée de nanofils ou de nanotubes ".

Ainsi, un réseau de fils métalliques est obtenu. Ces fils sont parallèles entre eux, de mêmes dimensions définies par la durée du dépôt électrolytique, par l'épaisseur de la membrane et la dimension des pores, cette dernière étant principalement fonction des caractéristiques de l'irradiation I et du processus de révélation, et peuvent être localisés sur le substrat selon un dessin soit aléatoire soit quasi-déterministe.

Un autre procédé de croissance de fils métalliques qui peut être utilisé, met en jeu une membrane nanoporeuse d'alumine. Il est décrit dans la publication "Controlled growth of single nanowires within a supported alumina template", A. Vlad et al. Nanotechnology 17 (2006) 4873-4876. Une membrane d'alumine $Al_2O_3$ est réalisée sur un substrat conducteur par dépôt sur ce substrat d'une membrane d'aluminium et oxydation anodique de cette membrane : on obtient une membrane nanoporeuse, avec des pores verticaux, formés par percement par effet d'oxydation anodique, disposés de façon aléatoire. Pour obtenir une localisation déterministe ou quasi-déterministe des fils métalliques, on utilise un masque. Par exemple, sur la membrane d'alumine, une couche de nitrure de silicium est déposée, elle-même recouverte d'une couche de PMMA (polyméthylméthacrylate). Des ouvertures sont réalisées par la technique connue de la lithographie électronique dans la membrane de PMMA, qui constitue alors un masque. La couche de nitrure de silicium est ouverte par attaque chimique, à travers ce masque. Le masque de nitrure de silicium (ou PMMA/Nitrure de silicium) permet la sélection des pores dans la membrane d'alumine, à raison d'un seul pore par ouverture du masque, dans lesquels faire croître les fils métalliques par croissance électrolytique. Les autres pores sont masqués. On peut aussi utiliser un masque en matériau isolant disposé sous la membrane, avec lequel la croissance électrolytique ne se produira que dans les pores de la membrane situés au-dessus des trous, comme décrit précédemment.

Il faut ensuite créer le revêtement 4 de carbone par-dessus chacun des fils métalliques. Plusieurs procédés peuvent être utilisés.

Dans un premier exemple, ce procédé va comprendre les étapes suivantes :

-   dépôt chimique en phase vapeur (CVD), ou en phase vapeur assisté par plasma (PECVD), ou encore dépôt par ablation laser ou par vaporisation par arc électrique d'une cible de graphite, d'une couche de carbone amorphe sur la surface du susbtrat 2 et des fils métalliques 20, puis
-   traitement thermique sous vide, avec une phase de montée en température suivie d'une étape de redescente en température. Typiquement, on aura une montée en température jusqu'à une température prédéterminée suivie d'un plateau d'une dizaine à quelques dizaines de minutes à cette température, puis une redescente en température.

Ce traitement permet dans un premier temps débutant typiquement à la fin de la montée en température, qu'une partie au moins du carbone amorphe déposé se dissolve à l'intérieur du matériau métallique sous la surface, sur une certaine profondeur, puis dans un deuxième temps, une expulsion hors du matériau métallique du carbone dissout, expulsion qui se fait sous forme de feuillets de carbone de symétrie sp2 qui forment alors le revêtement 4 de carbone de symétrie sp2 recherché.

Dans un exemple pratique, avec des fils métalliques en Nickel, le revêtement 4 peut être obtenu par un traitement thermique effectué sous $10^{-3}$ millibars environ, avec une température plateau de 850°C, et un plateau à cette température de l'ordre d'une dizaine de minutes. En général, on prévoira ensuite une phase dans laquelle le carbone amorphe en excès c'est à dire non dissout, est supprimé, par exemple par une étape de recuit sous oxygène à 400°C, ou par un traitement plasma.

L'apport de carbone peut se faire différemment. On peut notamment apporter le carbone par implantation ionique : le carbone est envoyé avec une énergie cinétique élevée de sorte qu'il traverse la surface des fils de métal (et du substrat) et qu'il y pénètre sur une profondeur ajustable. Le carbone se trouve ainsi sous forme dissoute dans le métal, avant l'étape de traitement thermique. Grâce à l'étape thermique, ce carbone est expulsé hors du métal sous forme de feuillets de carbone de symétrie sp2, formant le revêtement 4 recherché.

Dans ce qui précède, on choisit pour les fils métalliques, de préférence un métal connu pour catalyser la croissance des nanotubes de carbone. Des exemples sont le nickel, le fer, le cobalt, leurs alliages,...

Un autre procédé de dépôt peut être utilisé qui peut être avantageux vis à vis des propriétés de l'émetteur obtenu : c'est le dépôt d'une solution solide de carbone et d'un métal sur les fils métalliques et le substrat.

Ce procédé est intéressant car après l'étape de traitement thermique, il permet d'obtenir la structure suivante, comme illustré sur la figure 8: un fil métallique 3, revêtu d'une couche 30 essentiellement constituée du métal qui était en solution avec le carbone, et le revêtement 4 de carbone. Ceci est intéressant car on peut alors choisir le métal 30 contenant le carbone en solution dans lequel va se produire le phénomène d'expulsion de carbone dissout, avec la meilleure aptitude à produire le revêtement de carbone sp2, par lequel le phénomène d'expulsion sous forme de feuillets de carbone de symétrie sp2 est le plus performant, tandis que le métal 3 est choisi pour sa fréquence de plasma. Dans ce cas le coeur est à double métal, Le métal en contact 30 avec le revêtement de carbone meilleur catalyseur de la croissance du revêtement de carbone sp2 sera par exemple Fe, Co, Ni, Y, ...ou un alliage à partir d'un de ces métaux au moins, par exemple CoPt....

L'autre métal est choisi pour sa fréquence plasma. Au moins une de ses dimensions, par exemple sa hauteur, est choisie inférieure à la longueur d'onde de l'onde optique de commande du tube électronique comprenant une cathode selon l'invention.

Les procédés de fabrication qui viennent d'être décrits sont des processus de fabrication collectifs d'une pluralité d'émetteurs 1, mais ils peuvent s'appliquer aussi bien, en fonction de l'application visée, pour la fabrication d'un seul émetteur.

Dans un exemple pratique, des émetteurs 1 utilisés dans l'invention pourront avoir une hauteur de l'ordre de 2 micromètres, un diamètre de 50 nanomètres et un espacement moyen entre les émetteurs de 4 micromètres, c'est à dire deux fois la hauteur des émetteurs. On notera à cet égard que l'on peut aussi bien parler de tubes de dimensions nanométriques et ou micrométriques, plutôt que de nanotubes, selon les dimensions recherchées.

Les cathodes à émetteurs selon l'invention permettront la réalisation de tubes électroniques émettant des faisceaux à forte densité de courant jusqu'à 100

A/cm$^2$ et plus selon les applications visées. Avec une pluralité d'émetteurs, ces tubes à forte densité de courant, compacts et stables seront capables de fournir des faisceaux électroniques avec une densité de courant de l'ordre de 10 à 100 A/cm$^2$ ou plus.

Les cathodes froides Kf à émetteurs selon l'invention permettent ainsi de réaliser des amplificateurs de signaux terahertz à commande optique très performants, car non plus limités par la faible fréquence de plasma des nanotubes de carbone.

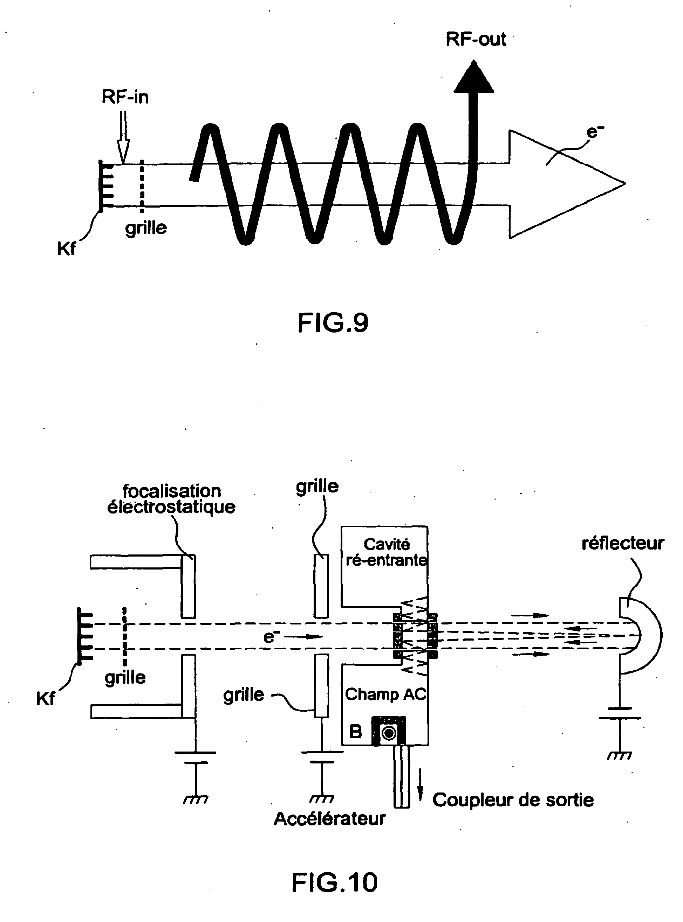

Un tube électronique à commande optique correspondant est représenté sur la figure 9.

Dans ce domaine de l'amplification de signaux à fréquences THz, une technique à commande optique utilise l'émission de paquets d'électrons par des émetteurs sous l'effet du champ électrique de deux ondes optiques interférentes F1, F2 dont la différence des fréquences est de l'ordre du THz. La disponibilité d'amplificateurs THz est intéressante, car elle permet de dissocier la fourniture de la puissance (amplificateurs THz) et la qualité du signal (utilisation de sources THz de faible puissance mais présentant d'autres caractéristiques avantageuses telles qu'une meilleure qualité spectrale par exemple). Ces amplificateurs de signaux terahertz à commande optique ont des applications intéressantes telle que par exemple la détection de molécules dangereuses. Or les nanotubes de carbone ayant une fréquence de plasma faible, de l'ordre de 300GHz, ne permettent pas l'amplification de champ car placés dans le champ électrique d'une onde de fréquence optique, ils se comportent comme des diélectriques : pas de conduction et donc pas d'accumulation d'électrons à leurs sommets. Avec un émetteur de type nanotube de carbone à coeur métallique selon l'invention, on bénéficie à la fois d'une plus grande densité de courant, et d'une fréquence de plasma élevée tout à fait compatible avec l'application décrite. Un tube électronique selon l'invention offre donc toutes les propriétés pour être avantageusement utilisé dans ce domaine.

Une variante particulièrement avantageuse est celle ou le deuxième matériau 3 est contenu au moins par le sommet du nanotube et occupe un volume dont les dimensions sont de préférences petites devant la longueur d'onde de l'onde optique.

De préférence, on donne au rapport d'aspect (hauteur sur diamètre) du deuxième matériau, des valeurs particulières qui favorisent la concentration et la localisation du champ optique incident notamment sur la surface émissive de l'émetteur, par effet de résonance plasmonique. Le champ électrique au sommet de la surface émissive devient égal au champ électrique de l'onde optique multiplié par un gain g qui dépend du rapport d'aspect du deuxième matériau et de la longueur d'onde de l'onde incidente.

En particulier, si la forme allongée du deuxième matériau est sensiblement un ellipsoïde prolate on peut donner l'ensemble des équations qui relient le gain à la longueur d'onde incidente et au rapport d'aspect dans le cas où le deuxième matériau a la forme d'un ellipsoïde prolate. On considère le cas où la polarisation de l'onde est parallèle à l'axe de révolution du nanotube, lui-même parallèle au grand axe de l'ellipsoïde prolate. On note a et b, respectivement les demi-petit et demi-grand axes de l'ellipsoïde prolate (qui éventuellement peuvent être égaux, cas de la sphère).

$f$ est le rapport du grand axe sur le petit axe de l'ellipsoïde : $f = b/a$, et

$e$ son excentricité, telle que :

$$e = \sqrt{1 - f^{-2}}$$

Le gain s'exprime alors analytiquement:

$$g = \frac{1}{1 + A}$$

avec

$$A = \frac{\varepsilon_1 - \varepsilon_m}{2e^3 f^2 \varepsilon_1} \left( 2e + \ln\left( \frac{1-e}{1+e} \right) \right).$$

$\varepsilon_l$ est la permittivité relative du milieu dans lequel se trouve l'ellipsoïde ($\varepsilon_l = 1$ dans le cas du vide).

$\varepsilon_m$ est la permittivité relative dudit deuxième matériau constituant l'ellipsoïde, avec :

$$\varepsilon_m = 1 - \frac{\omega_p}{\omega(\omega - i\tau)}$$

où $\omega$ est la pulsation de l'onde donnée en fonction de la longueur d'onde incidente par:

$$\omega = 2\pi c / \lambda ,$$

et $\omega_p$ la pulsation de plasma dudit deuxième matériau et $\tau$ son temps de relaxation électronique.

La figure 10 représente le gain exprimé en dB (20 log g) en fonction de la longueur d'onde pour un deuxième matériau 3 en Nickel pour $\varepsilon_l$, =1 et f=1,4. Avec ce rapport d'aspect, on observe l'existence d'une résonance à une longueur d'onde d'environ 525nm.

En ajustant la longueur d'onde incidente sur la résonance du système, nous voyons que des gains de l'ordre de 40dB deviennent possibles.

Si on change le rapport d'aspect f du deuxième matériau 3, on obtient une résonance à une autre longueur d'onde.

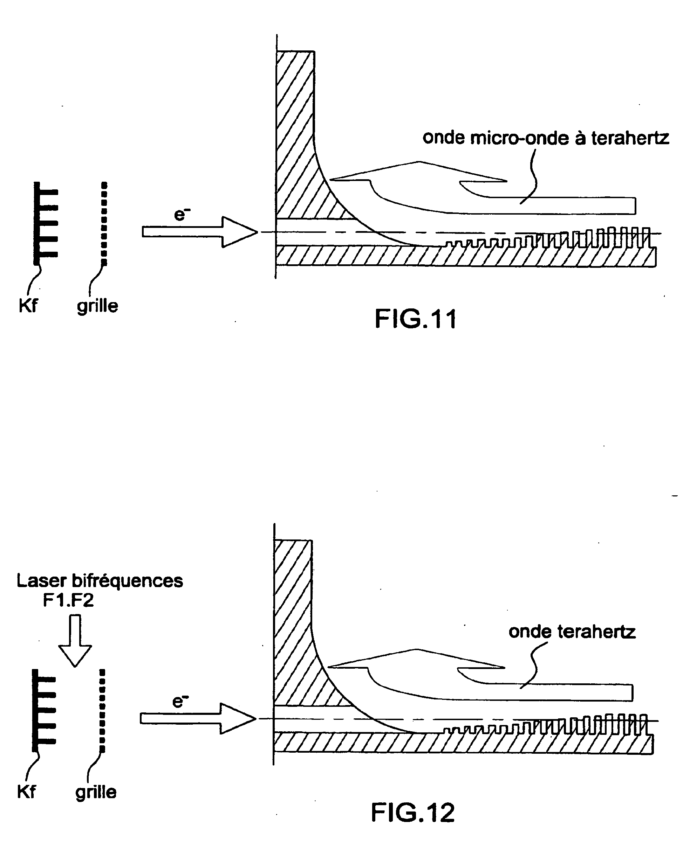

La figure 11 donne le rapport d'aspect en fonction de la longueur d'onde pour obtenir un gain maximum (ligne blanche), toujours pour le Nickel. L'échelle en niveau de gris donne les valeurs de gain en dB pour tous les points de la figure. Cette figure montre que pour une longueur d'onde donnée, il est possible de choisir un rapport d'aspect qui permette d'obtenir un gain élevé.

Les avantages de gain montrés à titre d'exemple pour le cas d'un ellipsoïde prolate sont approximativement conservés dans le cas de formes simplement allongées.

Il convient de noter que le deuxième matériau 3 est entouré typiquement d'une dizaine de feuillets de graphène. Cette couche superficielle perturbe la situation que nous venons de décrire en diminuant légèrement le gain (quelques dB) et la fréquence de la résonance. Nous conservons toujours le fort gain en champ là où l'émission de champ se produit.

Une autre variante particulièrement avantageuse consiste à utiliser dans la photocathode des structures à ondes de surface telles que décrites dans la demande de brevet FR 0511463 ayant pour titre "Structure optique de localisation d'un champ électromagnétique et dispositif détecteurs ou émetteurs comprenant une telle structure". Ces structures permettent de coupler l'onde optique incidente avec les ondes de surface et de concentrer le champ optique à l'endroit des sites des émetteurs.

La figure 12 montre une telle cathode froide avec des émetteurs 510 comprenant un tel dispositif à ondes de surface. Elle comprend une couche diélectrique de permittivité diélectrique négative 500 présentant une surface en relief en contact avec le vide.

Les émetteurs 510 sont réalisés en relief de la couche 500, dans une zone C de localisation en x et y du champ électrique. On obtient par effet du couplage de l'onde optique incidente à un mode de surface une réorientation du champ électrique de l'onde optique, qui devient parallèle à l'axe de la pointe émettrice. Cet effet, combiné aux effets avantageux d'émission par une pointe émettrice à nanotube de carbone à liaison sensiblement à symétrie sp2 et à coeur métallique selon l'invention, permet de réaliser un tube électronique à commande optique particulièrement performant.

Enfin, différents types de commandes optiques peuvent être utilisés. On peut utiliser une onde optique unique issue d'une seule source, par exemple un laser. Dans ce cas, un signal de modulation est « imprimé » sur l'onde préalablement à son arrivée sur la cathode. On peut également utiliser deux ondes optiques à des longueurs d'ondes très voisines de sorte que leurs fréquences diffèrent de quelques GHz à quelques THz, comme cela a été expliqué plus haut. Il peut s'agir d'un laser bi-fréquences, par exemple. Dans tous les cas, le spectre de ou des ondes incidentes demeure très étroit au regard de la largeur de la résonance plasmonique au niveau dudit deuxième matériau, et de la largeur de la résonance de la cavité de la structure concentratrice, de sorte que toutes les fréquences ou longueurs d'ondes présentes dans le spectre subiront le même gain.

## Revendications

1. Tube électronique à cathode froide comprenant un émetteur (1) ou une pluralité d'émetteurs, de dimensions nanométriques et/ou micrométriques, de forme allongée, à carbone à liaison sensiblement à symétrie sp2 et une source d'une onde optique pour commander le ou les émetteurs, **caractérisé en ce que** la zone émissive de chaque émetteur comprend un premier matériau (4) qui est du carbone à liaison sensiblement à symétrie sp2, recouvrant en contact direct ou indirect un deuxième matériau métallique (3), et **en ce que** le deuxième matériau a une fréquence de plasma sensiblement égale ou supérieure à la fréquence de l'onde optique de commande, et au moins une de ses dimensions est inférieure à la longueur d'onde de l'onde optique de commande.

2. Tube électronique selon la revendication 1, **caractérisé en ce que** l'émetteur comprend un troisième matériau (30) catalyseur de la croissance de carbone sp2, situé entre lesdits premier (4) et deuxième (3) matériaux, et en contact avec ceux-ci.

3. Tube électronique selon la revendication 1, **caractérisé en ce que** le deuxième matériau (3) est en contact direct avec ledit premier matériau, sur tout ou partie de la longueur de l'émetteur en partant du sommet, et est un métal choisi parmi Ni, Fe, Co,Y, ou un alliage avec au moins un de ces métaux.

4. Tube électronique selon le revendication 1, **caractérisé en ce que** le deuxième matériau a une forme allongée avec un rapport d'aspect hauteur sur diamètre déterminé qui maximise le champ au sommet de l'émetteur.

5. Tube électronique selon la revendication 1 ou 2, **caractérisé en ce que** le deuxième matériau a une forme d'ellipsoïde prolate avec un rapport d'aspect f donné par le rapport du grand axe sur le petit axe de l'ellipsoïde, qui est égal ou proche des valeurs qui maximisent le champ au sommet de l'émetteur.

6. Tube électronique selon les revendications 1 à 5, **caractérisé en ce que** la cathode froide contient un dispositif à ondes de surface permettant de coupler l'onde optique incidente avec les ondes de surface et de concentrer le champ optique à l'endroit des sites des émetteurs.

7. Tube électronique selon l'une des revendications 1 à 6, dans lequel les émetteurs de la cathode sont disposés les uns par rapport aux autres parallèles, sensiblement orthogonaux par rapport au substrat.

8. Tube électronique selon l'une quelconque des revendications précédentes comprenant une pluralité d'émetteurs, **caractérisé en ce que** lesdits émetteurs (1) sont distants les uns des autres d'une distance moyenne (d) sensiblement égale à une à deux fois la hauteur moyenne desdits émetteurs.

9. Tube électronique selon l'une des revendications 1 à 8, dans lequel les émetteurs de la cathode sont disposés les uns par rapport aux autres selon un dessin déterministe ou quasi-déterministe.

10. Tube électronique selon l'une des revendications 1 à 8, dans lequel les émetteurs de la cathode sont disposés les uns par rapport aux autres selon une disposition régulière ou périodique.

11. Tube électronique selon l'une des revendications 1 à 8, dans lequel les émetteurs de la cathode sont disposés les uns par rapport aux autres selon un dessin aléatoire ou quasi aléatoire.

12. Tube électronique selon l'une des revendications 1 à 11, **caractérisé en ce que** la commande optique est à une seule onde optique modulée.

13. Tube électronique selon l'une des revendications 1 à 11, **caractérisé en ce que** la commande optique est à deux ondes optiques de fréquences proches formant un battement dans la gamme de fréquences micro-ondes ou THz.

14. Dispositif électronique amplificateur microondes ou terahertz à commande optique selon l'une quelconque des revendications 1 à 13.

**Claims**

1. A cold cathode electronic tube comprising an emitter (1) or a plurality of emitters, having nanometric and/or micrometric dimensions and an elongated shape, made from carbon with a substantially sp2 symmetry bond, and an optical wave source for controlling the emitter(s), **characterised in that** the emitting zone of each emitter comprises a first material (4) which is carbon with a substantially sp2 symmetry bond, covering a second metal material (3) by direct or indirect contact, and **in that** the second material has a plasma frequency substantially equal to or greater than the frequency of the optical control wave and at least one of its dimensions is less than the wavelength of the optical control wave.

2. The electronic tube according to claim 1, **characterised in that** the emitter comprises a third material (30) which catalyses the sp2 carbon growth and which is located between said first (4) and second (3) materials and is in contact therewith.

3. The electronic tube according to claim 1, **characterised in that** the second material (3) is in direct contact with said first material along all or part of the length of the emitter starting from the top and is a metal selected from Ni, Fe, Co, Y or an alloy including at least one of these metals.

4. The electronic tube according to claim 1, **characterised in that** the second material has an elongated shape with a height aspect ratio on a predetermined diameter which maximises the field at the top of the emitter.

5. The electronic tube according to claim 1 or 2, **characterised in that** the second material has a prolate ellipsoidal shape with an aspect ratio f provided by the ratio between the large axis with the small axis of the ellipsoid, which is equal or close to the values which maximise the field at the top of the emitter.

6. The electronic tube according to claims 1 to 5, **characterised in that** the cold cathode contains a surface wave device allowing the incident optical wave to be coupled with the surface waves and to concentrate the optical field around the sites of the emitters.

7. The electronic tube according to any one of claims 1 to 6, wherein the emitters of the cathode are disposed parallel to each other, substantially orthogonal in relation to the substrate.

8. The electronic tube according to any one of the previous claims comprising a plurality of emitters, **characterised in that** said emitters (1) are spaced from each other by an average distance (d) substantially equal to one to two times the average height of said emitters.

9. The electronic tube according to any one of claims 1 to 8, wherein the emitters of the cathode are disposed one relative to the other according to a determinist or quasi-determinist pattern.

10. The electronic tube according to any one of claims 1 to 8, wherein the emitters of the cathode are disposed one relative to the other according to a regular or periodic pattern.

11. The electronic tube according to any one of claims 1 to 8, wherein the emitters of the cathode are disposed one relative to the other according to a random or quasi-random pattern.

12. The electronic tube according to any one of claims 1 to 11, **characterised in that** the optical control is a single modulated optical wave.

13. The electronic tube according to any one of claims 1 to 11, **characterised in that** the optical control has two close-frequency optical waves forming a pulse in the range of microwave or THz frequencies.

14. An electronic microwave or terahertz amplifying device with optical control according to any one of claims 1 to 13.

**Patentansprüche**

1. Elektronische Kaltkathodenröhre, die einen oder mehrere Emitter (1) mit Abmessungen im Nanometer- und/oder Mikrometerbereich und einer länglichen Form umfasst, aus Kohlenstoff mit einer im Wesentlichen symmetrischen sp2-Bindung und einer Lichtwellenquelle zum Steuern des einen oder der mehreren Emitter, **dadurch gekennzeichnet, dass** die emittierende Zone jedes Emitters ein erstes Material (4) umfasst, das Kohlenstoff mit einer im Wesentlichen symmetrischen sp2-Bindung ist, das durch direkten oder indirekten Kontakt ein zweites Metallmaterial (3) bedeckt, und **dadurch**, dass das zweite Material eine Plasmafrequenz hat, die im Wesentlichen gleich oder größer als die Frequenz der Steuerlichtwelle ist, und wenigstens eine ihrer Abmessungen kleiner als die Wellenlänge der Steuerlichtwelle ist.

2. Elektronische Röhre nach Anspruch 1, **dadurch gekennzeichnet, dass** der Emitter ein drittes Material (30) umfasst, das das Wachstum von sp2-Kohlenstoff katalysiert, der sich zwischen dem ersten (4) und dem zweiten (3) Material befindet und damit in Kontakt ist.

3. Elektronische Röhre nach Anspruch 1, **dadurch gekennzeichnet, dass** das zweite Material (3) mit dem ersten Material über die gesamte oder einen Teil der Länge des Emitters von der Spitze her in direktem Kontakt ist und ein Metall ist, das ausgewählt ist aus Ni, Fe, Co, Y oder einer Legierung, die wenigstens eines dieser Metall enthält.

4. Elektronische Röhre nach Anspruch 1, **dadurch gekennzeichnet, dass** das zweite Material eine längliche Gestalt mit einem Höhenaspektverhältnis auf einem vorbestimmten Durchmesser hat, der das Feld an der Spitze des Emitters maximiert.

5. Elektronische Röhre nach Anspruch 1 oder 2, **dadurch gekennzeichnet, dass** das zweite Material eine gestreckte Ellipsoidform mit einem Aspektverhältnis f hat, das sich durch das Verhältnis zwischen der großen Achse und der kleinen Achse des Ellipsoids ergibt, das fast oder ganz den Werten entspricht, die das Feld an der Spitze des Emitters maximieren.

6. Elektronische Röhre nach einem der Ansprüche 1 bis 5, **dadurch gekennzeichnet, dass** die Kaltkathode eine Oberflächenwellenvorrichtung beinhaltet, die eine Kopplung der einfallenden Lichtwelle mit den Oberflächenwellen und eine Konzentrierung des optischen Felds um die Emitterorte zulässt.

7. Elektronische Röhre nach einem der Ansprüche 1 to 6, wobei die Emitter der Kathode parallel zueinander im Wesentlichen orthogonal in Bezug auf das Substrat angeordnet sind.

8. Elektronische Röhre nach einem der vorherigen Ansprüche, die mehrere Emitter umfasst, **dadurch gekennzeichnet, dass** die Emitter (1) um eine mittlere Distanz (d) voneinander beabstandet sind, die im Wesentlichen gleich dem Ein- bis Zweifachen der mittleren Höhe der Emitter ist.

9. Elektronische Röhre nach einem der Ansprüche 1 bis 8, wobei die Emitter der Kathode nach einem deterministischen oder quasi-deterministischen Muster relativ zueinander angeordnet sind.

10. Elektronische Röhre nach einem der Ansprüche 1 bis 8, wobei die Emitter der Kathode in einem regelmäßigen oder periodischen Muster in Bezug zueinander angeordnet sind.

11. Elektronische Röhre nach einem der Ansprüche 1 bis 8, wobei die Emitter der Kathode nach einem zufälligen oder quasi-zufälligen Muster in Bezug zueinander angeordnet sind.

12. Elektronische Röhre nach einem der Ansprüche 1 bis 11, **dadurch gekennzeichnet, dass** die optische Steuerung mit einer einzelnen modulierten Lichtwelle erfolgt.

13. Elektronische Röhre nach einem der Ansprüche 1 bis 11, **dadurch gekennzeichnet, dass** die optische Steuerung mit zwei Lichtwellen mit naheliegenden Frequenzen erfolgt, die einen Impuls im Bereich von Mikrowellen- oder THz-Frequenzen bilden.

14. Elektronische Mikrowellen- oder Terahertz-Verstärkungsvorrichtung mit optischer Steuerung nach einem der Ansprüche 1 bis 13.

FIG.1

FIG.2

FIG.3

FIG.4

FIG.5a

FIG.5b

FIG.6

FIG.7

FIG.8

**FIG.9**

**FIG.10**

onde micro-onde à terahertz

e⁻

Kf    grille

**FIG.11**

Laser bifréquences
F1.F2

onde terahertz

e⁻

Kf    grille

**FIG.12**

fenêtre Be

Rayons X

grille

Kf

cible
(eau refroidie)

e⁻

fenêtre Be

Rayons X

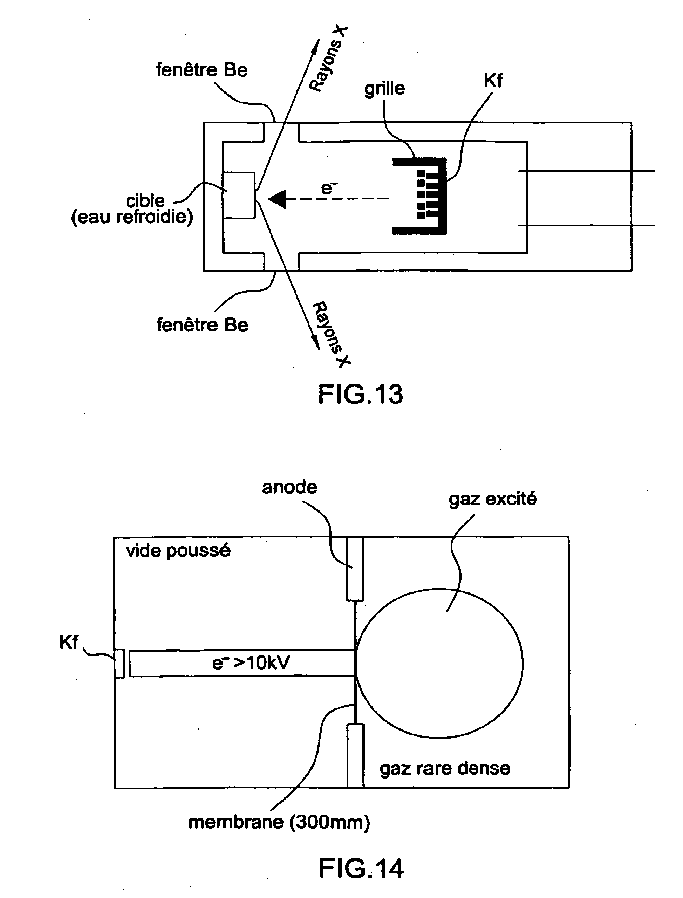

## FIG.13

anode

gaz excité

vide poussé

Kf

e⁻ >10kV

gaz rare dense

membrane (300mm)

## FIG.14

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20020006489 A
- JP 2006216799 B
- FR 2857954
- FR 0511463

**Littérature non-brevet citée dans la description**

- **N. Grobert et al.** Enhanced magnetic coercivities in Fe Nanowires. *Applied Physic Letters,* 22 Novembre 1999, vol. 75 (21
- **P.M. Ajayan et al.** Capillarity-induced filling of carbon nanotubes. *Nature,* 28 Janvier 1993, vol. 361, 333-334
- **A.A. Setlur et al.** A method for synthezing large quantities of carbon nanotubes and encapsulated copper nanowires. *Applied Physics Letters,* vol. 69 (3), 345-347
- **Laurence Dauginet-De Pra et al.** Fabrication of a new generation of track-etched templates and their use for the synthesis of metallic and organic nanostructures. *Nuclear Instruments and Methods in Physics Research Section B: Beam Interactions with Materials and Atoms,* Novembre 2002, vol. 196 (1-2), 81-88
- **A. Vlad et al.** Controlled growth of single nanowires within a supported alumina template. *Nanotechnology,* 2006, vol. 17, 4873-4876